# EUROPÄISCHE PATENTSCHRIFT

(11) **EP 3 341 625 B1**
(45) Veröffentlichungstag und Bekanntmachung des Hinweises auf die Patenterteilung: **16.06.2021**
(21) Anmeldenummer: 16742159.3
(22) Anmeldetag: 04.07.2016
(51) Int. Cl.: F16D 13/64

(54) **LAMELLENPAKET FÜR EINE MEHRSCHEIBENKUPPLUNG UND VERFAHREN ZUR MONTAGE EINES LAMELLENPAKETS**
PLATE PACK FOR A MULTI-DISC CLUTCH, AND METHOD FOR ASSEMBLING A PLATE PACK
PAQUET DE LAMELLES POUR EMBRAYAGE À DISQUES MULTIPLES ET PROCÉDÉ DE MONTAGE D'UN PAQUET DE LAMELLES

(30) Priorität: 23.07.2015 DE 102015213951
(43) Veröffentlichungstag der Anmeldung: 04.07.2018
(73) Patentinhaber: Schaeffler Technologies AG & Co. KG, 91074 Herzogenaurach (DE)
(72) Erfinder: HOPPE, Marcus, 77855 Achern (DE)
(86) Internationale Anmeldenummer: PCT/DE2016/200305
(87) Internationale Veröffentlichungsnummer: WO 2017/012618

(56) Entgegenhaltungen:
- WO-A1-2015/144163
- DE-A1- 1 575 983
- DE-A1-102012 213 143
- DE-A1-102013 112 591
- DE-A1-102014 204 001
- DE-C- 702 033
- US-A- 2 385 517
- US-A- 6 070 708
- US-A1- 2010 133 056
- US-A1- 2012 228 077

## Beschreibung

Die Erfindung betrifft ein Lamellenpaket für eine Mehrscheibenkupplung, insbesondere nasse Lamellenkupplung, und ein Verfahren zur Montage eines derartigen Lamellenpakets, mit dessen Hilfe Reibscheiben einer Kupplungsscheibe verpresst werden können.

Aus DE 10 2011 0185 589 A1 ist eine Zweischeibenkupplung bekannt, bei der eine Anpressplatte und eine Zwischenplatte jeweils über eine Blattfeder mit einer Gegenplatte verbunden sind. Bei einer axialen Verlagerung der Anpressplatte relativ zur Gegenplatte aus einer geöffneten Stellung der Zweischeibenkupplung heraus in eine geschlossene Stellung der Zweischeibenkupplung werden zwischen der Gegenplatte und der Zwischenplatte einerseits und zwischen der Zwischenplatte und der Anpressplatte andererseits vorgesehene Reibscheiben einer Kupplungsscheibe reibschlüssig verpresst. Wenn keine Betätigungskraft auf die Anpressplatte einwirkt, werden die Anpressplatte und die Zwischenplatte von der jeweiligen Blattfeder auf einen definierten Abstand zur Gegenplatte bewegt, um einen unnötigen Reibschluss mit den Reibscheiben der Kupplungsscheibe zu vermeiden.

Auch aus der DE 10 2013 112 591 A1 ist eine Kopplung der Zwischenplatte mit der Gegenplatte bekannt. Hier kommt noch eine zusätzliche Kopplung zwischen der Zwischenplatte und der Anpressplatte dazu. Beide Kopplungen erfolgen über Federelemente, so dass diese so aufeinander abgestimmt sein müssen, dass es zu definierten axialen Abständen der einzelnen Platten kommt.

Bei einer Lamellenkupplung können zwischen einer Anpressplatte und einer Gegenplatte mehrere als scheibenförmige Lamelle ausgestaltete Zwischenplatten vorgesehen sein, um über eine entsprechende Erhöhung der Reibkontaktstellen eine entsprechend hohe Anzahl von Reibscheiben der Kupplungsscheibe reibschlüssig verpressen zu können. Die Zwischenplatten und die Reibscheiben können hierzu axial relativ beweglich aber in Umfangsrichtung drehfest geführt sein. Wenn keine Betätigungskraft auf die Anpressplatte einwirkt, können die Zwischenplatten von den an den Reibkontaktstellen mit dem Reibscheiben anliegenden Schleppmomenten von den Reibscheiben allmählich weggedrückt werden.

Es besteht ein ständiges Bedürfnis mit Hilfe einer leicht montierbaren Reibungskupplung hohe Drehmomente übertragen zu können.

Es ist die Aufgabe der Erfindung Maßnahmen aufzuzeigen, die eine leicht montierbare Reibungskupplung zur Übertragung hoher Drehmomente ermöglichen.

Die Lösung der Aufgabe erfolgt erfindungsgemäß durch ein Lamellenpaket mit den Merkmalen des Anspruchs 1, ein Verfahren mit den Merkmalen des Anspruchs 8 sowie ein Verfahren mit den Merkmalen des Anspruchs 9. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Erfindungsgemäß ist ein Lamellenpaket für eine Mehrscheibenkupplung, insbesondere nasse Lamellenkupplung, vorgesehen mit einer von einem Betätigungselement axial verlagerbaren Anpressplatte zum Verpressen einer mehrere Reibscheiben aufweisenden Kupplungsscheibe zwischen der Anpressplatte und einer Gegenplatte, einer, insbesondere als scheibenförmige Lamelle ausgestalteten, Zwischenplatte zum Verpressen einer Reibscheibe der Kupplungsscheibe an einer zur Anpressplatte weisenden ersten Axialseite und zum Verpressen einer Reibscheibe der Kupplungsscheibe an einer von der Anpressplatte weg weisenden zweiten Axialseite und einem mit der Anpressplatte und der Zwischenplatte verbundenen Federelement zur automatischen Positionierung der Zwischenplatte auf einen definierten axialen Abstand relativ zur Anpressplatte.

Die Zwischenplatte ist dadurch mit der Anpressplatte und nicht mit einem axial feststehenden Bauteil gekoppelt. Die Zwischenplatte ist über das Federelement nicht parallel zur Anpressplatte, sondern in Reihe zur Anpressplatte angebunden. Die axiale Absolutbewegung der Zwischenplatte erfolgt dadurch in Abhängigkeit von der axialen Bewegung der Anpressplatte und nicht unabhängig von der axialen Bewegung der Anpressplatte. Dadurch ist es nicht erforderlich die Anbindung der Zwischenplatte über das Federelement soweit in radialer Richtung abstehen zu lassen, dass eine Beeinträchtigung mit anderen Bauteilen zu befürchten ist. Der radiale Bauraum, insbesondere außerhalb zu den Reibscheiben der Kupplungsscheibe ist dadurch weniger in Anspruch genommen, so dass eine bessere Zugänglichkeit zu anderen Bauteilen einer Reibungskupplung mit einem derartigen Lamellenpaket gegeben ist. Beispielsweise kann eine Gegenplatte der Reibungskupplung mit einem Mitnehmerring und/oder einem Lamellenträger über ein in axialer Richtung verlaufendes Befestigungsmittel verbunden werden, ohne dass zu befürchten ist, dass das Federelement die Zugänglichkeit des Befestigungsmittels während der Montage beeinträchtigt. Die Montage der Reibungskupplung ist dadurch vereinfacht. Die Zwischenplatte kann an ihren beiden Axialseiten jeweils mit einer Reibscheibe der Kupplungsscheibe in reibschlüssigen Kontakt gelangen, so dass eine entsprechende Erhöhung der Reibkontaktfläche erreicht ist. Dies ermöglicht die Übertragung eines entsprechend größeren Drehmoments, ohne dass die Kupplungsscheibe durchrutscht. Durch die Koppelung der Zwischenplatte mit der Anpressplatte über das Federelement kann bei einer erhöhten Reibkontaktfläche vermieden werden, dass das Federelement bei der Montage die Zugänglichkeit anderer Bauteile beeinträchtigt, so dass eine leicht montierbare Reibungskupplung zur Übertragung hoher Drehmomente ermöglicht ist.

Die Anpressplatte kann beispielweise einen axial abstehenden Nocken aufweisen, an dem das Betätigungselement, beispielsweise eine als Tellerfeder ausgestaltete Hebelfeder, angreifen kann, um die Anpressplatte in axialer Richtung zu verlagern. Die Reibscheiben der Kupplungsscheibe können insbesondere in axialer Richtung verlagerbar aber in Umfangsrichtung drehfest geführt sein. Wenn die Reibungskupplung geschlossen werden soll, kann die Anpressplatte zusammen mit der Zwischenplatte auf eine in axialer Richtung feststehende Gegenplatte zu verlagert werden, wodurch die zwischen der Anpressplatte und der Zwischenplatte und zwischen der Zwischenplatte und der Gegenplatte vorgesehenen Reibscheiben reibschlüssig verpresst werden können und ein Drehmomentfluss zwischen der Gegenplatte und der Kupplungsscheibe hergestellt werden kann. Hierzu kann über das Betätigungselement auf die Anpressplatte eine Betätigungskraft aufgebracht werden. Wenn die Reibungskupplung geöffnet werden soll, kann es auseichend sein auf die Anpressplatte keine Betätigungskraft mehr aufzubringen. Die Zwischenplatte kann in diesem Fall von dem Federelement automatisch von der Anpressplatte weggedrückt werden, bis ein definierter axialer Abstand relativ zur Anpressplatte erreicht ist, der größer als eine axiale Dicke der Reibscheibe im Neuzustand. Ein unbeabsichtigter Reibkontakt der Zwischenplatte und der Anpressplatte mit der Reibscheibe kann dadurch vermieden werden, so dass unnötige Schleppmomente vermieden sind. Das Lamellenpaket kann insbesondere für eine als Lamellenkupplung ausgestaltete Mehrscheibenkupplung, insbesondere eine trockene oder nasse Lamellenkupplung, verwendet werden.

Erfindungsgemäß ist mindestens eine weitere Zwischenplatte zum Verpressen einer Reibscheibe der Kupplungsscheibe an einer zur Anpressplatte weisenden ersten Axialseite und zum Verpressen einer Reibscheibe der Kupplungsscheibe an einer von der Anpressplatte weg weisenden zweiten Axialseite vorgesehen, wobei die weitere Zwischenplatte über ein weiteres Federelement mit der in Richtung der Anpressplatte nächsten Zwischenplatte verbunden ist und das weitere Federelement zur automatischen Positionierung der weiteren Zwischenplatte auf einen definierten axialen Abstand relativ zu der in Richtung der Anpressplatte nächsten Zwischenplatte vorgesehen ist. Durch die weitere Zwischenplatte kann die Reibkontaktfläche weiter erhöht werden, wodurch ein noch größeres Drehmoment übertragen werden kann. Insbesondere können mehrere weitere Zwischenplatten in axialer Richtung hintereinander gestapelt werden. Da die entsprechenden Federelemente in Reihe geschaltet und nicht parallel geschaltet sind, ist es prinzipiell möglich eine besonders große Anzahl an weiteren Zwischenplatten vorzusehen, ohne dass die Befestigung der Gegenplatte bei der Montage von einem der Federelemente beeinträchtigt wird.

Vorzugsweise weist die weitere Zwischenplatte einen ersten Befestigungsansatz zur Befestigung, insbesondere Vernietung, des zur Anpressplatte weisenden Federelements und einen zum ersten Befestigungsansatz in Umfangsrichtung versetzten zweiten Befestigungsansatz zur Befestigung, insbesondere Vernietung, des von der Anpressplatte weg weisenden Federelements auf, wobei der zweite Befestigungsansatz in axialer Richtung betrachtet zu dem in Richtung der Anpressplatte weisenden nächsten Federelement versetzt positioniert ist. Die Befestigungsansätze der jeweiligen Zwischenplatte sind dadurch soweit in Umfangsrichtung zueinander versetzt, dass das Federelement durch ein in axialer Richtung verlaufendes Befestigungsmittel befestigt werden kann, ohne dass die Befestigung des nachfolgenden Federelements mit dem vorherigen Federelement kollidieren kann.

Besonders bevorzugt gilt für einen Abstand d der Flächenschwerpunkte des ersten Befestigungsansatzes und des zweiten Befestigungsansatzes in Umfangsrichtung und einer Erstreckung I des Federelements und/oder des weiteren Federelements in Umfangsrichtung 1,00 ≤ d/l, insbesondere 1,00 ≤ d/l ≤ 1,50, vorzugsweise 1,01 ≤ d/l ≤ 1,30, weiter bevorzugt 1,05 ≤ d/l ≤ 1,20 und besonders bevorzugt 1,10 ≤ d/l ≤ 1,15. Wenn das Federelement mit dem ersten Befestigungsansatz befestigt ist, ist der Abstand des zweiten Befestigungsansatzes groß genug, dass zumindest ein Teil des zweiten Befestigungsansatzes an dem Federelement in Umfangsrichtung hervorragt und nicht von dem Federelement verdeckt ist. Der zweite Befestigungsansatz kann dadurch leicht für die Befestigung eines weiteren Federelements verwendet werden, ohne dass ein Befestigungsmittel, beispielsweise ein Niet, mit dem vorherigen Federelement kollidieren kann. Ferner können der erste Befestigungsansatz und der zweite Befestigungsansatz in Umfangsrichtung nah beieinander positioniert sein, dass es möglich ist besonders viele Federelemente in Umfangsrichtung hintereinander zu positionieren. Dies ermöglicht es eine Zwischenplatte über mehr als ein Federelement, beispielsweise drei Federelemente, anzubinden und/oder eine entsprechend hohe Anzahl an weiteren Zwischenplatten anzubinden.

Insbesondere ist der erste Befestigungsansatz der weiteren Zwischenplatte in axialer Richtung betrachtet zu einem ersten Befestigungsansatz einer in Richtung der Anpressplatte nächsten Zwischenplatte versetzt positioniert. Dadurch kann ein Befestigungsmittel zur Befestigung des Federelements in axialer Richtung, beispielsweise mit einem Schließkopf oder Setzkopf eines Niets, von dem ersten Befestigungsansatz abstehen ohne an dem Befestigungsmittel des nächsten nachfolgenden ersten Befestigungsansatzes anzuschlagen oder die Befestigung des Federelements mit dem ersten Befestigungsansatz zu beeinträchtigen.

Vorzugsweise überdeckt das weitere Federelement in axialer Richtung betrachtet ein in Richtung der Anpressplatte nächstes Federelement teilweise. Die in axialer Richtung hintereinander nachfolgenden Federelemente können in Umfangsrichtung zueinander etwas versetzt angeordnet sein, so dass das jeweilige Federelement leicht montiert werden kann. Da die Federelemente in axialer Richtung betrachtet sich teilweise gegenseitig abdecken können, ist es möglich besonders viele Federelemente in Umfangsrichtung vorzusehen, ohne dass sich die Montierbarkeit der jeweiligen Federelemente von einem anderen Federelement beeinträchtigt ist. Dies ermöglicht es eine Zwischenplatte über mehr als ein Federelement, beispielsweise drei Federelemente, anzubinden und/oder eine entsprechend hohe Anzahl an weiteren Zwischenplatten anzubinden.

Besonders bevorzugt ist das Federelement und/oder das weitere Federelement als im Wesentlichen in tangentialer Richtung und/oder Umfangsrichtung sich erstreckende Blattfeder ausgestaltet. Das Federelement kann dadurch eine besonders geringe Erstreckung in axialer Richtung aufweisen. Die Zwischenplatte kann dadurch leicht als vergleichsweise dünne scheibenartige Lamelle ausgestaltet sein. Dies ermöglicht es in einem gegebene Bauraum besonders viele Zwischenplatten vorzusehen, die eine entsprechend hohe Reibkontaktfläche ermöglichen, wodurch ein entsprechend hohes Drehmoment übertragen werden kann. Durch die Ausgestaltung des mindestens einen Federelements, vorzugsweise sämtlicher mit einer Zwischenplatte oder einer weiteren Zwischenplatte verbundener Federelemente, als Blattfeder kann ein axiales Anstoßen des Federelements an einem Hindernis vermieden werden, so dass auch bei einer besonders dünnen Zwischenplatte der gesamte Verschleißbereich der Reibscheiben genutzt werden kann. Die maximale Komprimierbarkeit des Lamellenpakets bei verschlissenen Reibscheiben muss auch bei besonders dünnen Zwischenplatten nicht durch die Federelemente begrenzt sein.

Die Erfindung betrifft ferner eine Mehrscheibenkupplung, insbesondere nasse Lamellenkupplung, zum Kuppeln mindestens einer Getriebeeingangswelle eines Kraftfahrzeuggetriebes mit einer Antriebswelle eines Kraftfahrzeugmotors, mit einer Gegenplatte zur Einleitung oder Ausleitung eines Drehmoments des Kraftfahrzeugmotors, einer Kupplungsscheibe zur Ausleitung oder Einleitung des Drehmoments und einem Lamellenpaket, das wie vorstehend beschrieben aus- und weitergebildet sein kann, zum reibschlüssigen Verpressen der Kupplungsscheibe mit der Gegenplatte, wobei die Zwischenplatte und/oder die mindestens eine weitere Zwischenplatte des Lamellenpakets zu der Gegenplatte in Umfangsrichtung relativ verdrehbar ist. Durch die Koppelung der Zwischenplatte des Lamellenpakets mit der Anpressplatte über das Federelement kann bei einer erhöhten Reibkontaktfläche vermieden werden, dass das Federelement bei der Montage die Zugänglichkeit anderer Bauteile beeinträchtigt, so dass eine leicht montierbare Reibungskupplung zur Übertragung hoher Drehmomente ermöglicht ist. Da die jeweilige Zwischenscheibe über das zugeordnete Federelement zumindest mittelbar mit der Anpressplatte gekoppelt ist, ist eine separate Führung der Zwischenplatten beispielsweise über einen Lamellenkorb nicht erforderlich und kann eingespart werden. Die Mehrscheibenkupplung kann dadurch einfacher aufgebaut sein. Insbesondere wenn die Federelemente als Blattfeder ausgestaltet sind, kann dadurch eine begrenzte Verdrehbarkeit der Zwischenplatte zugelassen werden, so dass die Blattfeder bei einer Biegung in axialer Richtung nicht die Zwischenplatte blockieren kann.

Insbesondere ist das Lamellenpaket an der Gegenplatte über ein weiteres Federelement abgestützt. Insbesondere wenn alle Federelemente im Wesentlichen die gleiche Federkennlinie aufweisen, kann sich bei einer beliebigen axialen Relativlage der Anpressplatte zu der Gegenplatten ein Kräftegleichgewicht zwischen den Federelementen einstellen, das zu im Wesentlichen gleichen Lüftspalten zwischen den Zwischenplatten sowie zwischen den äußeren Zwischenplatten und der Anpressplatte beziehungsweise der Gegenplatte führen. Dadurch kann an den jeweiligen Reibkontaktstellen ein im Wesentlichen gleichartiger Reibkontakt auftreten, der zu einem gleichmäßigen Verschleiß der Reibscheiben führt. Da keine Reibscheibe vorzeitig vollständig verschlissen wird, kann eine besonders hohe Lebensdauer der Mehrscheibenkupplung erreicht werden. Insbesondere kann besonders einfach eine Verschleißnachstellung realisiert werden, indem lediglich die Position der Anpressplatte in der geöffneten Stellung der Mehrscheibenkupplung gegebenenfalls gegen die Federkraft der Federelemente in axialer Richtung nachgestellt wird, um einen zum Neuzustand der Reibscheiben vergleichbaren Hubweg der Anpressplatte vorzusehen.

Die Erfindung betrifft ferner ein Verfahren zur Montage eines Lamellenpakets, das wie vorstehend beschrieben aus- und weitergebildet sein kann, insbesondere für eine Mehrscheibenkupplung, die wie vorstehend beschrieben aus- und weitergebildet sein kann, bei dem das zur Anpressplatte weisende Federelement mit der Zwischenplatte und/oder das zur Anpressplatte weisende weitere Federelement mit der weiteren Zwischenplatte zur Ausbildung einer Zwischenplatten-Baueinheit verbunden wird, die Zwischenplatten-Baueinheit mit der Anpressplatte verbunden wird und nachfolgend solange eine weitere Zwischenplatten-Baueinheit mit der von der Anpressplatte weg weisenden Seite der Zwischenplatte der zuvor verbundenen Zwischenplatten-Baueinheit verbunden wird bis eine vordefinierte Anzahl von Zwischenplatten des Lamellenpakets erreicht ist. Durch die Koppelung der Zwischenplatte des Lamellenpakets mit der Anpressplatte über das Federelement kann bei einer erhöhten Reibkontaktfläche vermieden werden, dass das Federelement bei der Montage die Zugänglichkeit anderer Bauteile beeinträchtigt, so dass eine leicht montierbare Reibungskupplung zur Übertragung hoher Drehmomente ermöglicht ist. Die Zwischenplatte mit dem Federelement sowie die weitere Zwischenplatte mit dem weiteren Federelement können eine im Wesentlichen identisch aufgebaute Zwischenplatten-Baueinheit ausbilden, die kostengünstig durch eine Vielzahl von Gleichteilen in Massenfertigung hergestellt werden kann. Je nach gewünschtem zu übertragenen maximalen Drehmoment kann eine hierzu passende Anzahl an Zwischenplatten-Baueinheit sukzessive in axialer Richtung hintereinander gestapelt und miteinander verbunden werden. Das Lamellenpaket mit der gewünschten Anzahl an Reibkontaktstellen kann hierbei beginnend bei der Anpressplatte durch ein sukzessives Befestigen der jeweils nächsten Zwischenplatten-Baueinheit montiert werden und schließlich mit einer Gegenplatte einer Mehrscheibenkupplung befestigt werden.

Die Erfindung betrifft ferner ein Verfahren zur Montage eines Lamellenpakets, das wie vorstehend beschrieben aus- und weitergebildet sein kann, insbesondere für eine Mehrscheibenkupplung, die wie vorstehend beschrieben aus- und weitergebildet sein kann, bei dem das von der Anpressplatte weg weisende weitere Federelement mit der Zwischenplatte und/oder das von der Anpressplatte weg weisende weitere Federelement mit der weiteren Zwischenplatte zur Ausbildung einer Zwischenplatten-Baueinheit verbunden wird, die Zwischenplatten-Baueinheit mit einer Gegenplatte oder einer Zwischenplatten-Baueinheit verbunden wird, nachfolgend solange eine weitere Zwischenplatten-Baueinheit mit der zur Anpressplatte weisenden Seite der Zwischenplatte der zuvor verbundenen Zwischenplatten-Baueinheit verbunden wird bis eine vordefinierte Anzahl von Zwischenplatten des Lamellenpakets erreicht ist und nachfolgend die Anpressplatte über das Federelement mit der Zwischenplatte der zuvor verbundenen Zwischenplatten-Baueinheit verbunden wird. Durch die Koppelung der Zwischenplatte des Lamellenpakets mit der Anpressplatte über das Federelement kann bei einer erhöhten Reibkontaktfläche vermieden werden, dass das Federelement bei der Montage die Zugänglichkeit anderer Bauteile beeinträchtigt, so dass eine leicht montierbare Reibungskupplung zur Übertragung hoher Drehmomente ermöglicht ist. Die Zwischenplatte mit dem Federelement sowie die weitere Zwischenplatte mit dem weiteren Federelement können eine im Wesentlichen identisch aufgebaute Zwischenplatten-Baueinheit ausbilden, die kostengünstig durch eine Vielzahl von Gleichteilen in Massenfertigung hergestellt werden kann. Je nach gewünschtem zu übertragenen maximalen Drehmoment kann eine hierzu passende Anzahl an Zwischenplatten-Baueinheit sukzessive in axialer Richtung hintereinander gestapelt und miteinander verbunden werden. Das Lamellenpaket mit der gewünschten Anzahl an Reibkontaktstellen kann hierbei beginnend bei der Gegenplatte einer Mehrscheibenkupplung durch ein sukzessives Befestigen der jeweils nächsten Zwischenplatten-Baueinheit montiert werden und schließlich mit der Anpressplatte befestigt werden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische perspektivische Ansicht einer Zwischenplatten-Baueinheit für ein Lamellenpaket einer Mehrscheibenkupplung,
Fig. 2: eine schematische perspektivische Ansicht einer Anpressplatte für ein Lamellenpaket einer Mehrscheibenkupplung,
Fig. 3: eine schematische perspektivische Ansicht eines Lamellenpakets für eine Mehrscheibenkupplung in einer dünnen Ausführung,
Fig.4: eine schematische perspektivische Ansicht eines Lamellenpakets für eine Mehrscheibenkupplung in einer dickeren Ausführung und
Fig. 5: eine schematische perspektivische Ansicht mehrere Montagestufen eines dicken Lamellenpakets für eine Mehrscheibenkupplung.

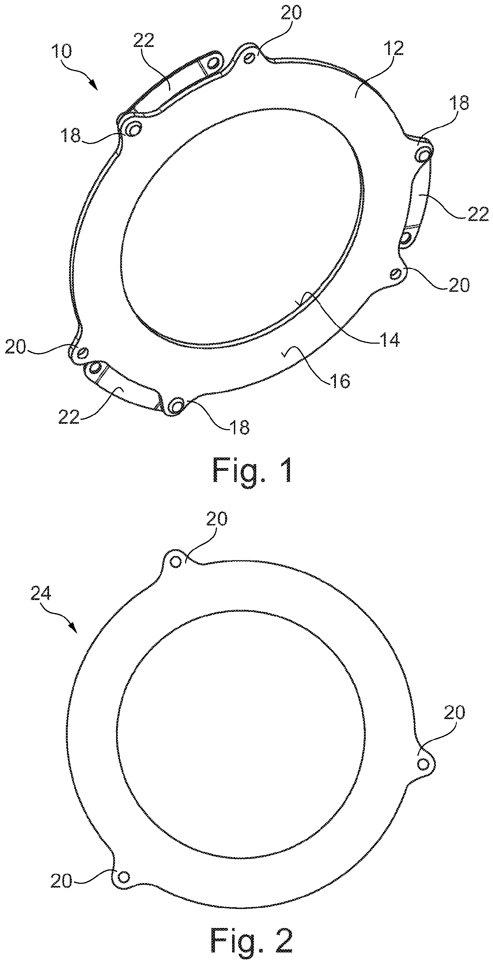

Die in Fig. 1 dargestellte Zwischenplatten-Baueinheit 10 weist eine Zwischenplatte 12 auf, die über eine erste Axialseite 14 und eine zweite Axialseite 16 jeweils eine Reibscheibe einer Kupplungsscheibe reibschlüssig verpressen kann. Die Zwischenplatte 12 weist einen nach radial außen abstehenden ersten Befestigungsansatz 18 und einen nach radial außen abstehenden zweiten Befestigungsansatz 20 auf. Im dargestellten Ausführungsbeispiel ist mit dem ersten Befestigungsansatz 20 ein als Blattfeder ausgestaltetes Federelement 22 vormontiert. Beispielsweise sind jeweils drei in Umfangsrichtung gleichmäßig verteilte Federelemente 22 vorgesehen.

Die Zwischenplatten-Baueinheit 10 kann mit der in Fig. 2 dargestellten Anpressplatte 24 verbunden werden. Hierzu weist die Anpressplatte 24 ebenfalls die nach radial außen abstehende zweiten Befestigungsansätze 20 auf, mit denen das zugeordnete Federelement 22 jeweils verbunden werden kann. Alternativ kann die Anpressplatte 24 identisch zu der Zwischenplatte 12 als Gleichteil ausgestaltet sein, wobei in diesem Fall die ersten Befestigungsansätze 18 funktionslos sein können.

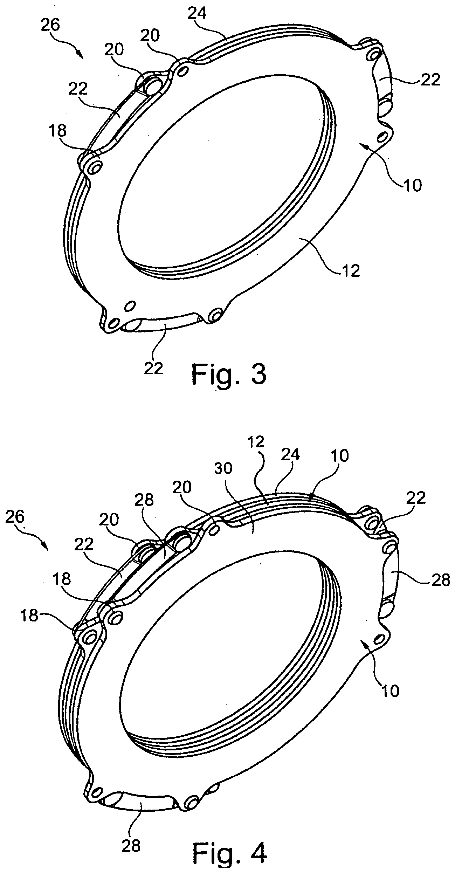

Wenn die Zwischenplatten-Baueinheit 10 mit der Anpressplatte 24 verbunden ist, ergibt sich das in Fig. 3 dargestellte Lamellenpaket 26. Das Federelement 22 kann hierbei mit dem ersten Befestigungsansatz 18 der Zwischenplatte 12 und mit dem zweiten Befestigungsansatz 20 der Anpressplatte 24 vernietet sein. Der Abstand des ersten Befestigungsansatzes 18 zu dem zweiten Befestigungsansatz 20 der Zwischenplatte 12 in Umfangsrichtung ist hierbei derart gewählt, dass der zweite Befestigungsansatz 20 nicht von dem Federelement 22 verdeckt ist, so dass eine gute Montierbarkeit gegeben ist.

Der in Umfangsrichtung versetzte zweite Befestigungsansatz 20 ermöglicht es mit dem freien zweiten Befestigungsansatz 20 der Zwischenplatte 12 über ein als Blattfeder ausgestaltetes weiteres Federelement 28 eine weitere Zwischenplatte 30 einer weiteren Zwischenplatten-Baueinheit 10 anzubinden, wie in Fig. 4 dargestellt. Das weitere Federelement 28 kann hierbei leicht mit dem zweiten Befestigungsansatz 20 vernietet werden, wobei weder das Befestigungselement 22 der vorherigen Zwischenplatten-Baueinheit 10 noch die weitere Zwischenplatte 30 der nachfolgenden Zwischenplatten-Baueinheit 10 die Montierbarkeit beeinträchtigt.

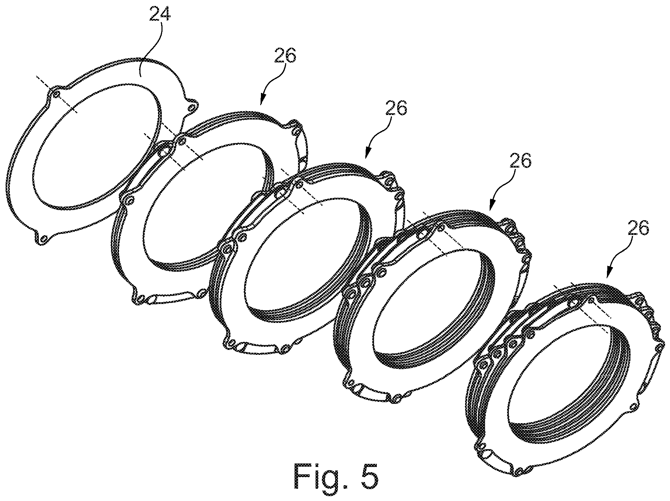

Wie in Fig. 5 dargestellt kann das Lamellenpaket 26 in weiteren Montageschritten sukzessive mit einer weiteren Zwischenplatten-Baueinheit 10 befestigt werden bis sich eine gewünschte Anzahl an Zwischenplatten 12, 30 mit einer entsprechenden Anzahl an Reibkontaktstellen zu den Reibscheiben der Kupplungsscheibe erreicht ist. Im dargestellten Ausführungsbeispiel wird das Lamellenpaket 26 beginnend bei der Anpressplatte 24 durch die sukzessive Befestigung der Zwischenplatten-Baueinheiten 10 ausgebildet. Alternativ ist es möglich an dem anderen axialen Ende des Lamellenpakets 26 zu beginnen, beispielsweise bei einer Gegenplatte der Mehrscheibenkupplung, und sukzessive die Zwischenplatten-Baueinheiten 10 zu befestigen bis schließlich die Anpressplatte 24 befestigt wird. In diesem Fall kann insbesondere die Zwischenplatten-Baueinheiten 10 derart vormontiert sein, dass das weitere Federelement 28 mit dem zweiten Befestigungsansatz 20 vormontiert ist und nicht das Federelement 22 mit dem ersten Befestigungsansatz 18.

### Bezugszeichenliste

- 10: Zwischenplatten-Baueinheit
- 12: Zwischenplatte
- 14: erste Axialseite
- 16: zweite Axialseite
- 18: ersten Befestigungsansatz
- 20: zweiter Befestigungsansatz
- 22: Federelement
- 24: Anpressplatte
- 26: Lamellenpaket
- 28: weiteres Federelement
- 30: weitere Zwischenplatte

## Patentansprüche

1. Lamellenpaket für eine Mehrscheibenkupplung mit
einer von einem Betätigungselement axial verlagerbaren Anpressplatte (24) zum Verpressen einer mehrere Reibscheiben aufweisenden Kupplungsscheibe zwischen der Anpressplatte (24) und einer Gegenplatte,
einer, insbesondere als scheibenförmige Lamelle ausgestalteten, Zwischenplatte (12) zum Verpressen einer Reibscheibe der Kupplungsscheibe an einer zur Anpressplatte (24) weisenden ersten Axialseite (14) und zum Verpressen einer Reibscheibe der Kupplungsscheibe an einer von der Anpressplatte (24) weg weisenden zweiten Axialseite (14) und
einem mit der Anpressplatte (24) und der Zwischenplatte (12) verbundenen Federelement (22) zur automatischen Positionierung der Zwischenplatte (12) auf einen definierten axialen Abstand relativ zur Anpressplatte (24), **dadurch gekennzeichnet, dass** mindestens eine weitere Zwischenplatte (30) zum Verpressen einer Reibscheibe der Kupplungsscheibe an einer zur Anpressplatte (24) weisenden ersten Axialseite (14) und zum Verpressen einer Reibscheibe der Kupplungsscheibe an einer von der Anpressplatte (24) weg weisenden zweiten Axialseite (16) vorgesehen ist, wobei die weitere Zwischenplatte (30) über ein weiteres Federelement (28) mit der in Richtung der Anpressplatte (24) nächsten Zwischenplatte (12, 30) verbunden ist und das weitere Federelement (28) zur automatischen Positionierung der weiteren Zwischenplatte (30) auf einen definierten axialen Abstand relativ zu der in Richtung der Anpressplatte (24) nächsten Zwischenplatte (12, 30) vorgesehen ist.

2. Lamellenpaket nach Anspruch 1, **dadurch gekennzeichnet, dass** die weitere Zwischenplatte (30) einen ersten Befestigungsansatz (18) zur Befestigung, insbesondere Vernietung, des zur Anpressplatte (24) weisenden Federelements (22, 28) und einen zum ersten Befestigungsansatz (18) in Umfangsrichtung versetzten zweiten Befestigungsansatz (20) zur Befestigung, insbesondere Vernietung, des von der Anpressplatte (24) weg weisenden Federelements (22, 28) aufweist, wobei der zweite Befestigungsansatz (20) in axialer Richtung betrachtet zu dem in Richtung der Anpressplatte (24) weisenden nächsten Federelement (22, 28) versetzt positioniert ist.

3. Lamellenpaket nach Anspruch 2, **dadurch gekennzeichnet, dass** für einen Abstand d der Flächenschwerpunkte des ersten Befestigungsansatzes (18) und des zweiten Befestigungsansatzes (20) in Umfangsrichtung und einer Erstreckung I des Federelements (22) und/oder des weiteren Federelements (28) in Umfangsrichtung 1,00 ≤ d/l, insbesondere 1,00 ≤ d/l ≤ 1,50, vorzugsweise 1,01 ≤ d/l ≤ 1,30, weiter bevorzugt 1,05 ≤ d/l ≤ 1,20 und besonders bevorzugt 1,10 ≤ d/l ≤ 1,15 gilt.

4. Lamellenpaket nach Anspruch 2 oder 3, **dadurch gekennzeichnet, dass** der erste Befestigungsansatz (18) der weiteren Zwischenplatte (30) in axialer Richtung betrachtet zu einem ersten Befestigungsansatz (18) einer in Richtung der Anpressplatte (224) nächsten Zwischenplatte (12, 30) versetzt positioniert ist.

5. Lamellenpaket nach einem der Ansprüche 1 bis 4 **dadurch gekennzeichnet, dass** das weitere Federelement (28) in axialer Richtung betrachtet ein in Richtung der Anpressplatte (24) nächstes Federelement (22, 28) teilweise überdeckt.

6. Lamellenpaket nach einem der Ansprüche 1 bis 5 **dadurch gekennzeichnet, dass** das Federelement (22) und/oder das weitere Federelement (28) als im Wesentlichen in tangentialer Richtung und/oder Umfangsrichtung sich erstreckende Blattfeder ausgestaltet ist.

7. Mehrscheibenkupplung, insbesondere nasse Lamellenkupplung, zum Kuppeln mindestens einer Getriebeeingangswelle eines Kraftfahrzeuggetriebes mit einer Antriebswelle eines Kraftfahrzeugmotors, mit einer Gegenplatte zur Einleitung oder Ausleitung eines Drehmoments des Kraftfahrzeugmotors, einer Kupplungsscheibe zur Ausleitung oder Einleitung des Drehmoments und einem Lamellenpaket (26) nach einem der Ansprüche 1 bis 6 zum reibschlüssigen Verpressen der Kupplungsscheibe mit der Gegenplatte, wobei die Zwischenplatte (12) und/oder die mindestens eine weitere Zwischenplatte (30) des Lamellenpakets (26) zu der Gegenplatte in Umfangsrichtung relativ verdrehbar ist.

8. Verfahren zur Montage eines Lamellenpakets (26) nach einem der Ansprüche 1 bis 7, insbesondere für eine Mehrscheibenkupplung nach Anspruch 8, bei dem das zur Anpressplatte (24) weisende Federelement (22) mit der Zwischenplatte (12) und/oder das zur Anpressplatte (24) weisende weitere Federelement (28) mit der weiteren Zwischenplatte (30) zur Ausbildung einer Zwischenplatten-Baueinheit (10) verbunden wird,
die Zwischenplatten-Baueinheit (10) mit der Anpressplatte (24) verbunden wird und
nachfolgend solange eine weitere Zwischenplatten-Baueinheit (10) mit der von der Anpressplatte (24) weg weisenden Seite der Zwischenplatte (12, 30) der zuvor verbundenen Zwischenplatten-Baueinheit (10) verbunden wird bis eine vordefinierte Anzahl von Zwischenplatten (12, 30) des Lamellenpakets (26) erreicht ist.

9. Verfahren zur Montage eines Lamellenpakets (26) nach einem der Ansprüche 1 bis 7, insbesondere für eine Mehrscheibenkupplung nach Anspruch 7, bei dem das von der Anpressplatte (24) weg weisende weitere Federelement (28) mit der Zwischenplatte (12) und/oder das von der Anpressplatte (24) weg weisende weitere Federelement (28) mit der weiteren Zwischenplatte (30) zur Ausbildung einer Zwischenplatten-Baueinheit (10) verbunden wird,
die Zwischenplatten-Baueinheit (10) mit einer Gegenplatte oder einer Zwischenplatten-Baueinheit (10) verbunden wird,
nachfolgend solange eine weitere Zwischenplatten-Baueinheit (10) mit der zur Anpressplatte (24) weisenden Seite der Zwischenplatte (30) der zuvor verbundenen Zwischenplatten-Baueinheit (10) verbunden wird bis eine vordefinierte Anzahl von Zwischenplatten (12, 30) des Lamellenpakets (26) erreicht ist und nachfolgend die Anpressplatte (24) über das Federelement (22) mit der Zwischenplatte (12) der zuvor verbundenen Zwischenplatten-Baueinheit (10) verbunden wird.

## Claims

1. A plate pack for a multi-disc clutch having
a pressure plate (24), which can be axially displaced by an actuation element for pressing a clutch disc having several friction discs between the pressure plate (24) and a counter plate,
an intermediate plate (12), in particular designed as a disc-type plate, for pressing a friction disc of the clutch disc against a first axial side (14) facing the pressure plate (24) and for pressing a friction disc of the clutch disc against a second axial side (14) facing away from the pressure plate (24) and
a spring element (22) which is connected to the pressure plate (24) and the intermediate plate (12) for automatically positioning the intermediate plate (12) at a defined axial distance relative to the pressure plate (24), **characterised in that** at least one further intermediate plate (30) is provided for pressing a friction disc of the clutch disc against a first axial side (14) facing towards the pressure plate (24) and for pressing a friction disc of the clutch disc against a second axial side (16) facing away from the pressure plate (24), wherein the further intermediate plate (30) is connected, via a further spring element (28), to the intermediate plate (12, 30) next in the direction of the pressure plate (24) and the further spring element (28) is provided for automatically positioning the further intermediate plate (30) at a defined axial distance relative to the intermediate plate (12, 30) next in the direction of the pressure plate (24).

2. The plate pack according to claim 1, **characterised in that** the further intermediate plate (30) has a first fastening attachment (18) for fastening, in particular riveting, the spring element (22, 28) facing the pressure plate (24) and a second fastening attachment (20) offset in the circumferential direction relative to the first fastening attachment (18) for fastening, in particular riveting, the spring element (22, 28) facing away from the pressure plate (24), wherein the second fastening attachment (20) as viewed in the axial direction is positioned offset relative to the next spring element (22, 28) facing in the direction of the pressure plate (24).

3. The plate pack according to claim 2, **characterised in that** 1.00 ≤ d/l, in particular 1.00 ≤ d/l ≤ 1.50, preferably 1.01 ≤ d/l ≤ 1.30, more preferably 1.05 ≤ d/l ≤ 1.20 and particularly preferably 1.10 ≤ d/l ≤ 1.15, applies for a distance d between the centroids of the first fastening attachment (18) and of the second fastening attachment (20) in the circumferential direction and an extension I of the spring element (22) and/or of the further spring element (28) in the circumferential direction.

4. The plate pack according to claim 2 or 3, **characterised in that** the first fastening attachment (18) of the further intermediate plate (30), as viewed in the axial direction, is positioned offset to a first fastening attachment (18) of an intermediate plate (12, 30) next in the direction of the pressure plate (224).

5. The plate pack according to any one of claims 1 to 4, **characterised in that** the further spring element (28), viewed in the axial direction, partially covers a spring element (22, 28) next in the direction of the pressure plate (24).

6. The plate pack according to any one of claims 1 to 5, **characterised in that** the spring element (22) and/or the further spring element (28) is designed as a leaf spring extending essentially in the tangential direction and/or circumferential direction.

7. A multi-disc clutch, in particular a wet multi-disc clutch, for coupling at least one gear input shaft of a motor vehicle transmission with a drive shaft of a motor vehicle engine, having a counter plate for introducing or diverting a torque of the motor vehicle engine, a clutch disc for diverting or introducing the torque and a plate pack (26) according to any one of claims 1 to 6 for frictionally pressing the clutch disc with the counter plate, wherein the intermediate plate (12) and/or the at least one further intermediate plate (30) of the disc pack (26) is rotatable relative to the counter plate in the circumferential direction.

8. A method for assembling a disc pack (26) according to any one of claims 1 to 7, in particular for a multi-disc clutch according to claim 8, in which the spring element (22) facing the pressure plate (24) is connected to the intermediate plate (12) and/or the further spring element (28) facing the pressure plate (24) is connected to the further intermediate plate (30) to form an intermediate plate assembly (10),
the intermediate plate assembly (10) is connected to the pressure plate (24), and
subsequently, a further intermediate plate assembly (10) is connected to the side of the intermediate plate (12, 30) of the previously connected intermediate plate assembly (10) facing away from the pressure plate (24) until a predefined number of intermediate plates (12, 30) of the plate pack (26) is reached.

9. The method for assembling a disc pack (26) according to any one of claims 1 to 7, in particular for a multi-disc clutch according to claim 7, in which the spring element (28) facing away from the pressure plate (24) is connected to the intermediate plate (12) and/or the further spring element (28) facing away from the pressure plate (24) is connected to the further intermediate plate (30) to form an intermediate plate assembly (10),
the intermediate plate assembly (10) is connected to a counter plate or an intermediate plate assembly (10),
subsequently, a further intermediate plate assembly (10) is connected to the side of the intermediate plate (30) of the previously connected intermediate plate assembly (10) facing the pressure plate (24) until a predefined number of intermediate plates (12, 30) of the plate pack (26) is reached, and
subsequently the pressure plate (24) is connected via the spring element (22) to the intermediate plate (12) of the previously connected intermediate plate assembly (10).

## Revendications

1. Paquet de lamelles pour un embrayage à disques multiples comprenant
un plateau de pression (24), pouvant être déplacé axialement par un élément d'actionnement, pour presser un disque d'embrayage ayant une pluralité de disques de friction entre le plateau de pression (24) et un contre-plateau,
un plateau intermédiaire (12), en particulier réalisé sous forme de lamelle en forme de disque, pour presser un disque de friction du disque d'embrayage sur un premier côté axial (14) faisant face au plateau de pression (24) et pour presser un disque de friction du disque d'embrayage sur un second côté axial (14) opposé au plateau de pression (24) et
un élément ressort (22) relié au plateau de pression (24) et au plateau intermédiaire (12) pour le positionnement automatique du plateau intermédiaire (12) à une distance axiale définie par rapport au plateau de pression (24), **caractérisé en ce qu'**en au moins un autre plateau intermédiaire (30) est prévu pour presser un disque de friction du disque d'embrayage sur un premier côté axial (14) faisant face au plateau de pression (24) et pour presser un disque de friction du disque d'embrayage sur un second côté axial (16) opposé au plateau de pression (24), dans lequel l'autre plateau intermédiaire (30) est relié par un autre élément ressort (28) au plateau intermédiaire (12, 30) suivant en direction du plateau de pression (24) et l'autre élément ressort (28) est prévu pour le positionnement automatique de l'autre plateau intermédiaire (30) à une distance axiale définie par rapport au plateau intermédiaire (12, 30) suivant en direction du plateau de pression (24).

2. Paquet de lamelles selon la revendication 1, **caractérisé en ce que** l'autre plateau intermédiaire (30) présente une première attache de fixation (18) pour la fixation, en particulier le rivetage, de l'élément ressort (22, 28) faisant face au plateau de pression (24) et une seconde attache de fixation (20) décalée dans la direction circonférentielle par rapport à la première attache de fixation (18) pour la fixation, en particulier le rivetage, de l'élément ressort (22, 28) opposé au plateau de pression (24), la seconde attache de fixation (20), vue dans la direction axiale, étant positionnée décalée par rapport à l'élément ressort (22, 28) suivant en direction du plateau de pression (24).

3. Paquet de lamelles selon la revendication 2, **caractérisé en ce que**, pour une distance d des centres de gravité de la première attache de fixation (18) et de la seconde attache de fixation (20) dans la direction circonférentielle et un prolongement I de l'élément ressort (22) et/ou de l'autre élément ressort (28) dans la direction circonférentielle, 1,00 ≤ d/l, en particulier 1,00 ≤ d/l ≤ 1,50, de préférence 1,01 ≤ d/l ≤ 1,30, plus préférablement 1,05 ≤ d/1 < 1,20 et de manière particulièrement préférée 1,10 ≤ d/1 < 1,15 s'applique.

4. Paquet de lamelles selon la revendication 2 ou 3, **caractérisé en ce que** la première attache de fixation (18) de l'autre plateau intermédiaire (30), vue dans la direction axiale, est positionnée décalée par rapport à une première attache de fixation (18) d'un plateau intermédiaire (12, 30) suivant en direction du plateau de pression (224).

5. Paquet de lamelles selon l'une quelconque des revendications 1 à 4, **caractérisé en ce que** l'autre élément ressort (28), vu dans la direction axiale, recouvre partiellement un élément ressort (22, 28) suivant en direction du plateau de pression (24).

6. Paquet de lamelles selon l'une quelconque des revendications 1 à 5, **caractérisé en ce que** l'élément ressort (22) et/ou l'autre élément ressort (28) est réalisé sous forme de ressort à lame s'étendant essentiellement dans la direction tangentielle et/ou dans la direction circonférentielle.

7. Embrayage à disques multiples, en particulier embrayage à lamelles humide, pour accoupler au moins un arbre d'entrée de transmission d'une transmission de véhicule automobile avec un arbre d'entraînement d'un moteur de véhicule automobile, comprenant un contre-plateau pour initier ou dévier un couple du moteur de véhicule automobile, un disque d'embrayage pour dévier ou initier le couple et un paquet de lamelles (26) selon l'une quelconque des revendications 1 à 6 pour presser par friction le disque d'embrayage avec le contre-plateau, le plateau intermédiaire (12) et/ou le au moins un autre plateau intermédiaire (30) du paquet de lamelles (26) pouvant tourner par rapport au contre-plateau dans la direction circonférentielle.

8. Procédé de montage d'un paquet de lamelles (26) selon l'une quelconque des revendications 1 à 7, en particulier pour un embrayage à disques multiples selon la revendication 8, dans lequel l'élément ressort (22) faisant face au plateau de pression (24) est relié au plateau intermédiaire (12) et/ou l'autre élément ressort (28) faisant face au plateau de pression (24) est relié à l'autre plateau intermédiaire (30) pour former un ensemble de plateaux intermédiaires (10),
l'ensemble de plateaux intermédiaires (10) est relié au plateau de pression (24) et
par la suite, un autre ensemble de plateaux intermédiaires (10) est relié au côté, opposé au plateau de pression (24), du plateau intermédiaire (12, 30) de l'ensemble de plateaux intermédiaires (10) précédemment relié jusqu'à ce qu'un nombre prédéfini de plateaux intermédiaires (12, 30) du paquet de lamelles (26) soit atteint.

9. Procédé de montage d'un paquet de lamelles (26) selon l'une quelconque des revendications 1 à 7, en particulier pour un embrayage à disques multiples selon la revendication 7, dans lequel l'autre élément ressort (28) opposé au plateau de pression (24) est relié au plateau intermédiaire (12) et/ou l'autre élément ressort (28) opposé au plateau de pression (24) est relié à l'autre plateau intermédiaire (30) pour former un ensemble de plateaux intermédiaires (10),
l'ensemble de plateaux intermédiaires (10) est relié à un contre-plateau ou à un ensemble de plateaux intermédiaires (10),
par la suite, un autre ensemble de plateaux intermédiaires (10) est relié au côté, faisant face au plateau de pression (24), du plateau intermédiaire (30) de l'ensemble de plateaux intermédiaires (10) précédemment relié jusqu'à ce qu'un nombre prédéfini de plateaux intermédiaires (12, 30) du paquet de lamelles (26) soit atteint et
par la suite, le plateau de pression (24) est relié par l'élément ressort (22) au plateau intermédiaire (12) de l'ensemble de plateaux intermédiaires (10) précédemment relié.
